# FASCICULE DE BREVET EUROPEEN

(11) **EP 1 999 404 B1**
(45) Date de publication et mention de la délivrance du brevet: **27.02.2013**
(21) Numéro de dépôt: 07731200.7
(22) Date de dépôt: 26.03.2007
(51) Int. Cl.: F16L 41/00, G01L 19/00

(54) **ENSEMBLE DE DISTRIBUTION DE FLUIDE ET UTILISATION CORRES ONDANT**
FLUIDABGABESYSTEM UND ENTSPRECHENDE VERWENDUNG
FLUID DISTRIBUTION SYSTEM AND CORRESPONDING USE

(30) Priorité: 28.03.2006 FR 0602692
(43) Date de publication de la demande: 10.12.2008
(73) Titulaire: EIF, 93100 Montreuil sous Bois (FR)
(72) Inventeur: CORIC, Philippe, F-44700 Orvault (FR)
(74) Mandataire: Blot, Philippe Robert Emile
(86) Numéro de dépôt international: PCT/FR2007/000517
(87) Numéro de publication internationale: WO 2007/110504

(56) Documents cités:
- DE-A1- 4 226 445
- DE-A1- 10 322 452
- US-A- 3 589 387
- US-A- 5 341 846

## Description

La présente invention concerne un ensemble de distribution de fluide, du type comprenant :
- des modules de canalisation du fluide et de montage de composants fonctionnels destinés à interagir avec le fluide, et
- un corps ayant au moins une face de support des modules, ladite face de support présentant un réseau régulier de moyens de fixation des modules.

L'invention s'applique, par exemple, à l'analyse ou à la mesure de caractéristiques de fluides circulant dans des installations industrielles.

Pour cela, on utilise des ensembles du type précité. Le corps est alors constitué par une plaque mince. Les moyens de fixation sont des orifices taraudés qui traversent la plaque et qui sont répartis conformément à l'une des deux possibilités prévues par la norme ANSI/ISA-76.00.02-2002.

Les orifices sont donc répartis pour former des carrés, l'espacement entre deux orifices d'un même carré pouvant être de 37 mm ou de 56 mm.

Ainsi, il est possible de fixer sur la plaque des modules de canalisation de fluide, dont les dimensions sont également normalisées. Ces modules ont ainsi des formes sensiblement parallélépipédiques à base carrée dont les côtés ont une longueur de 38,2 mm si la première possibilité est choisie ou, respectivement de 57,2 mm si la seconde possibilité est choisie.

Les modules présentent des canaux intérieurs et sont disposés les uns à la suite des autres en étant raccordés par des éléments de raccordement, afin d'assurer la canalisation du fluide. Les modules servent également au montage de composants fonctionnels destinés à interagir avec le fluide, tels que des vannes, des robinets, des manomètres, des transducteurs, des capteurs...

Grâce à la norme précitée, les plaques percées, les modules et les composants sont interchangeables, quels que soient leurs fabricants, ce qui permet notamment de garantir des coûts réduits.

Pour analyser un fluide, par exemple dans une installation industrielle, on peut disposer l'ensemble de distribution du fluide, muni des composants fonctionnels adéquats, en aval d'un piquage réalisé sur la conduite de l'installation où circule le fluide à analyser. On prévoit généralement un filtre entre le piquage et l'ensemble de distribution de fluide, afin d'éviter de polluer les composants d'analyse et de mesure.

De tels ensembles de distribution connus s'avèrent satisfaisants mais il est encore souhaitable de réduire leur encombrement.

DE-103 22 452 décrit un ensemble de mesure de pression pour un frein électro hydraulique. Cet ensemble comprend un corps destiné à supporter un module unique.

US-3 589 387 décrit un ensemble du type précité. Le corps y est formé par un assemblage de blocs et présente un passage pour le fluide. Le corps ne comprend qu'une seule face de support de modules.

Un but de l'invention est donc de résoudre ce problème en fournissant un ensemble de distribution du type précité qui soit d'encombrement plus réduit.

A cet effet, l'invention a pour objet un ensemble selon la revendication 1.

Selon des modes particuliers de réalisation, l'invention peut comprendre l'une ou plusieurs des caractéristiques énoncées dans les revendications 2 à 11, prises isolément ou selon toutes les combinaisons techniquement possibles.

L'invention a également pour objet une utilisation selon les revendications 12 ou 13.

L'invention sera mieux comprise à la lecture de la description qui va suivre, donnée uniquement à titre d'exemple, et faite en se référant aux dessins annexés, sur lesquels :
- la figure 1 est une vue schématique en coupe longitudinale d'un ensemble de distribution de fluide selon l'invention,
- la figure 2 est une section schématique, prise suivant la ligne II-II de la figure 1, et illustrant le corps de l'ensemble de la figure 1,
- la figure 3 est une vue partielle de dessus d'une face de support du corps de l'ensemble de la figure 1,
- la figure 4 est une vue schématique de face du flasque gauche du corps de l'ensemble de la figure 1, prise suivant la flèche IV,
- la figure 5 est une vue schématique de dessus d'un module de canalisation de fluide de l'ensemble de la figure 1,
- la figure 6 est une vue schématique en coupe d'un élément de raccordement qui peut être utilisé avec l'ensemble de la figure 1, et
- la figure 7 est une vue schématique latérale illustrant un ensemble de distribution de fluide selon un autre mode de réalisation de l'invention.

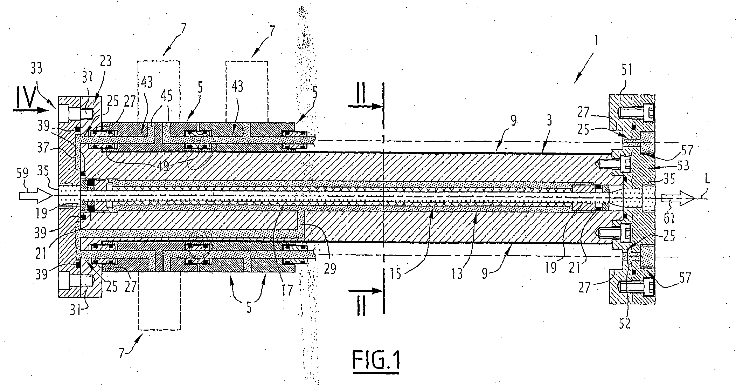

La figure 1 montre un ensemble 1 de distribution de fluide qui comprend principalement un corps 3, des modules 5 de canalisation de fluide et des composants fonctionnels 7 destinés à interagir avec le fluide. Plus précisément, ces composants 7 sont des composants de traitement et/ou de mesure et/ou d'analyse du fluide ou de son écoulement.

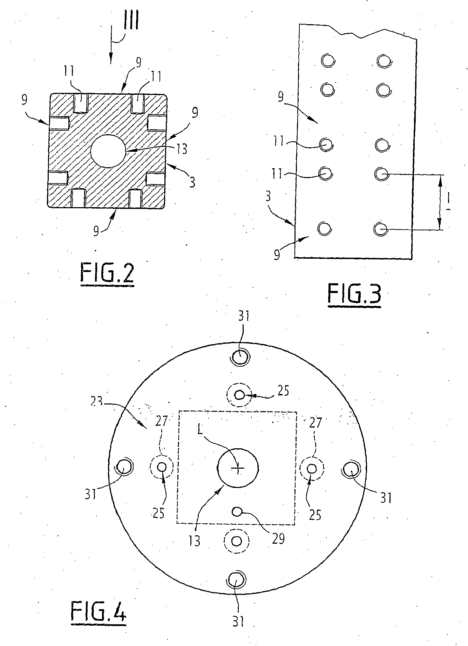

Le corps 3 s'étend le long d'un axe longitudinal L. Il a une forme sensiblement cylindrique de section carrée. Ainsi, le corps 3 présente quatre faces 9 (fig. 2), dont chacune correspond à un côté dudit carré.

Chaque face 9 est munie d'un réseau régulier d'orifices de fixation 11 taraudés. Ce réseau satisfait à la norme ANSI/ISA-76.00.02-2002. Ainsi, les côtés des carrés reliant les axes des orifices 11 peuvent avoir une longueur l de 37 mm, si la première possibilité de cette norme est choisie.

Comme on le verra par la suite, le réseau d'orifices 11 permet la fixation sur les faces 9 de modules 5 répondant également à la norme ANSI/ISA-76.00.02-2002, c'est-à-dire des modules 5 qui ont en vue de dessus une forme sensiblement carrée avec une longueur de côté L de 38,2 mm, si la première possibilité de la norme est choisie.

Le corps 3 est traversé par un passage principal 13 de circulation du fluide qui s'étend, à l'intérieur du corps 3, le long de l'axe L. Dans l'exemple représenté, le passage principal 13 est sensiblement centré dans le corps 3.

Dans l'exemple représenté également, le passage principal 13 reçoit un filtre 15 qui comprend un élément 17 de filtrage radial et deux bouchons creux 19. Les bouchons 19 sont insérés dans les extrémités du passage 13 et sont munis de joints 21. Les bouchons 19 enserrent longitudinalement entre eux l'élément de filtrage 17 en le maintenant radialement à distance de la paroi latérale du passage principal 13.Dans une autre variante, les bouchons 19 peuvent être soudés à l'élément de filtrage 17.

Une première extrémité du corps 3 (à gauche sur la figure 1) est prolongée par un premier flasque 23 de maintien des modules 5. Ce flasque 23 est venu de matière avec le corps 3.

Le premier flasque 23 est traversé par quatre orifices 25 d'amenée du fluide vers les modules 5. Ces orifices 25 sont par exemple répartis régulièrement angulairement autour de l'axe L. Les orifices 25 sont étagés et présentent ainsi des tronçons élargis 27 qui sont orientés vers le reste du corps 3, c'est-à-dire vers la droite sur la figure 1.

Un passage auxiliaire 29 pour le fluide est également ménagé dans le corps 3. Ce passage 29 débouche d'une part dans la paroi latérale du passage principal 13, sensiblement dans une région médiane du corps 3, puis le passage auxiliaire 29 s'étend longitudinalement vers le flasque 23, traverse ce dernier et débouche à l'extérieur.

Le flasque 23 comporte de plus des orifices 31 de fixation d'une plaque de fermeture 33 sur le flasque 23. Ces orifices 31 peuvent être répartis de manière analogue aux orifices 25 et être disposés dans le flasque 23 radialement plus à l'extérieur que les orifices 25.

La plaque de fermeture 33 est traversée par un orifice central 35 qui communique avec l'intérieur du bouchon 19 disposé en regard (à gauche sur la figure 1), l'intérieur de ce bouchon 19 communiquant avec l'intérieur de l'élément de filtrage 17.

La plaque 33 maintient ce bouchon 19 en place à l'intérieur du passage 13.

Un lamage 37 est ménagé dans la face de la plaque de fermeture 33 disposée en regard du flasque 23. Ce lamage 37 met en communication le passage auxiliaire 29 et les orifices 25 et a, par exemple, une forme d'anneau. Des garnitures d'étanchéité 39 peuvent être prévues dans les faces en regard du flasque 23 et de la plaque de fermeture 33.

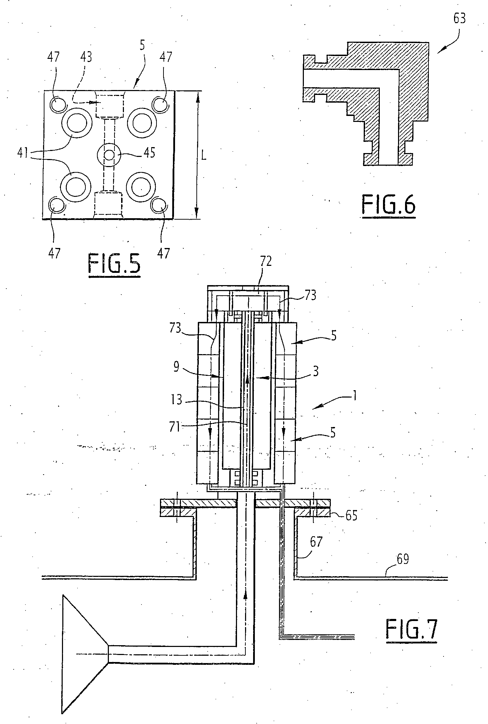

Tous les modules 5 ont des structures analogues et un seul sera décrit par la suite par référence à la figure 5.

Comme on l'a indiqué précédemment, il s'agit d'un module 5 parfaitement classique et satisfaisant à la norme ANSI/ISA-76.00.02-2002. Il ne sera donc décrit que rapidement. Le module 5 est un bloc sensiblement parallélépipédique qui présente en vue de dessus une forme sensiblement carrée dont les angles sont munis de logements 41 destinés à recevoir des vis de fixation du module 5 sur l'une des faces 9 du corps 3 par vissage dans ses orifices 11.

Le module 5 est percé, dans l'exemple représenté sur la figure 5, d'un canal 43 destiné à être traversé par le fluide et qui traverse de part en part le module 5. Le canal 43 débouche dans la face supérieure du module 5 par un orifice 45 qui servira à alimenter un composant 7 monté sur le module 5 par l'intermédiaire de quatre orifices taraudés 47 disposés en carré dans le module 5.

Comme cela est également classique, les modules 5 utilisés dans l'ensemble de la figure 1 peuvent présenter des formes et des nombres de canaux 43 ou d'orifices 45 différents de ceux du module 5 représenté sur la figure 5.

Dans l'ensemble de la figure 1, chaque face 9 est équipée de modules 5 qui sont alignés les uns à la suite des autres le long de l'axe longitudinal L. Dans certaines applications cependant, certaines faces 9 peuvent être inutilisées. La communication entre ces différents modules 5 et avec les tronçons élargis 27 des orifices 25 du premier flasque 23 est assurée de manière classique par des éléments de raccordement 49 insérés dans les extrémités des canaux 43 et dans les tronçons 27.

De manière classique également, des composants 7 sont montés sur les modules 5.

On observera que seuls certains des modules 5 et des composants 7 ont été représentés sur la figure 1.

Le composant 7 en haut à gauche sur la figure 1 peut par exemple être une vanne, le composant 7 suivant à droite peut être un manomètre, le composant 7 inférieur à gauche peut être un décolmateur. Ainsi, on constitue sur chaque face 9 un circuit, l'ensemble des circuits permettant d'effectuer les mesures et analyses du fluide requises. On notera que des éléments de raccordement coudés 63 (fig. 6) peuvent être utilisés dans certaines variantes pour raccorder entre eux des modules 5 prévus sur des faces 9 adjacentes et donc les circuits qu'elles portent.

Le corps 3 est muni à sa deuxième extrémité (à droite sur la figure 1) d'un deuxième flasque 51 de maintien des modules 5. Ce flasque 51 est vissé sur le corps 3 et présente, comme le flasque 23, quatre orifices 25 terminés par des tronçons évasés 27. Le flasque 51 maintient le bouchon 19 droit en place dans le passage principal 13.

Des éléments de raccordement 49 (non-représentés) sont engagés dans les tronçons 27 du deuxième flasque 51 et les modules 5 situés les plus à droite sur la figure 1. Un élément 49 de raccordement est disposé entre les modules de chaque paire de modules 5. On rappelle en outre que des éléments de raccordement 49 sont disposés entre le premier flasque 23 et les modules 5 situés les plus à gauche sur la figure 1.

Les modules 5 sont donc d'une part fixés sur les faces 9 par vissage dans les orifices 11, et d'autre part maintenus longitudinalement via les éléments 49 de raccordement et les flasques 23 et 51.

Dans l'exemple représenté, un lamage 52 s'étendant environ sur 180° autour de l'axe L relie l'orifice 25 inférieur et les deux orifices médians 25 du deuxième flasque 51. Ce lamage 52, par exemple en forme de secteur de couronne, est fermé par une plaque de fermeture 53 fixée sur le flasque 51. Cette plaque 53 comporte un orifice central 35, analogue à l'orifice 35 de la plaque 33, et deux orifices étagés 57 de passage du fluide ayant traversé les modules 5. Un de ces orifices 57 est situé en regard de l'orifice 25 supérieur et communique avec ce dernier. L'autre orifice 57 est situé en regard de l'orifice 25 inférieur du flasque 51 et communique avec cet orifice 25 et le lamage 52.

L'ensemble 1 de la figure 1 est par exemple, disposé sur une boucle de dérivation du circuit d'alimentation en huile du moteur d'un navire, par exemple un pétrolier.

Le fluide circulant dans la boucle de dérivation, en l'occurrence l'huile, pénètre dans l'orifice 35 gauche comme matérialisé par la flèche 59 sur la figure 1. Une partie de ce fluide circule longitudinalement à l'intérieur de l'élément de filtrage 17 et ressort par l'autre orifice 35, comme matérialisé par la flèche 61, avant d'être renvoyé vers le reste de la boucle de dérivation puis vers le circuit d'alimentation du moteur. Le corps 3 forme ainsi un tronçon de la boucle de dérivation.

Une autre partie de ce fluide ayant pénétré dans l'élément de filtrage 17 est filtrée en traversant radialement l'élément de filtrage 17, puis circule dans le passage auxiliaire 29 et est renvoyée par le lamage 37 vers les orifices 25 du flasque 23. Cette autre partie du fluide alimente les alignements de module 5 prévus sur chaque face 9. Le fluide traverse alors les circuits formés sur chacune des faces 9 par les modules 5 et les composants 7 où les mesures et/ou analyses requises sont effectuées.

Le fluide est ensuite collecté d'une part par les orifices 25 supérieurs du flasque 51 et de la plaque 53 et d'autre part par les orifices 25 inférieur et médians du flasque 51, par le lamage 52 et par l'orifice inférieur 57 de la plaque 53. Ce fluide collecté est ensuite renvoyé vers la boucle de dérivation et vers le circuit d'alimentation en huile.

On observera que l'orifice 57 supérieur de la plaque 53 peut être dédié, par exemple, à l'évacuation d'une fraction polluée du fluide, auquel cas cette fraction n'est pas renvoyée vers la boucle de dérivation ou le circuit principal. On notera également que, en fonction des besoins, le lamage 52 peut , par exemple, ne raccorder que deux orifices 25, qu'un autre lamage 52 peut être utilisé simultanément, qu'aucun lamage 52 peut n'être prévu...

L'ensemble 1 de la figure 1 a un encombrement particulièrement réduit.

Cela est dû d'une part au fait que le corps 3 présente lui-même un passage intérieur 13 destiné à la circulation du fluide, et d'autre part au fait que le corps 3 présente plusieurs faces 9 de support des modules 5 disposées autour du passage 13.

On observera également que le temps de transport du fluide entre le passage principal 13 et les composants 7 est réduit, ce qui accroît la pertinence de mesures et analyses effectuées.

De manière générale, de nombreux autres agencements peuvent être utilisés.

Ainsi, à titre d'exemple, la figure 7 illustre un autre mode de réalisation dans lequel l'ensemble 1 est monté sur une bride 65 d'un piquage 67 prévu sur une conduite 69 d'une installation industrielle.

Comme illustré par la flèche 71, le fluide traverse le passage 13, qui ne comporte pas d'élément de filtrage, en s'écoulant vers le haut (sur la figure 6), est filtre dans un filtre 72 supérieur solidaire du corps 3, puis est renvoyé vers le bas pour traverser, comme illustré par les flèches 73, les alignements de modules 5 prévus le long des faces 9, avant d'être renvoyé vers la conduite 69. On observera que les composants 7 n'ont pas été représentés sur la figure 6 pour ne pas la surcharger.

De manière générale, d'autres formes de corps 3 peuvent être utilisées, par exemple de sections polygonales autres que carrées et le corps 3 peut être réalisé en plusieurs parties.

De même, le nombre de faces de support 9 peut être varié, et peut notamment être inférieur à quatre. On peut même, par exemple, utiliser un corps 3 qui ne présente qu'une face 9 de support de modules. En effet, le simple fait de prévoir dans le corps 3 un passage 13 destiné au fluide permet de gagner en encombrement.

Inversement, on peut utiliser un corps 3 présentant plusieurs faces de support 9, par exemple correspondant chacune au côté d'un polygone, sans utiliser de passage intérieur 13 dans le corps 9.

Plus généralement encore, le passage 13 n'est pas nécessairement un passage destiné à être traversé par le fluide. Il peut ainsi s'agir, à titre d'exemple, d'un passage d'accumulation du fluide, dont le fluide est expulsé, après accumulation, grâce à un piston pour traverser le ou les alignements de modules 5 prévus sur la ou les faces de support 9 de l'ensemble 1.

De manière générale également les orifices 11 peuvent être remplacés par d'autres moyens de fixation, par exemple des saillies, et être disposés sous la forme d'un motif régulier autre que ceux décrits précédemment. Cela sera notamment le cas si la norme précitée devait évoluer ou être remplacée par une norme imposant des contraintes différentes.

On notera également que le corps 3, les modules 5 et les composants 7 peuvent être vendus séparément.

On observera que les principes ci-dessus peuvent être utilisés dans de nombreux domaines et notamment dans des installations industrielles ou des véhicules.

## Revendications

1. Ensemble (1) de distribution de fluide, du type comprenant :
- des modules (5) de canalisation du fluide et de montage de composants fonctionnels (7) destinés à interagir avec le fluide, les composants fonctionnels (7) étant destinés à être montés sur les modules (5) et les modules (5) étant destinés à être raccordés entre eux par des éléments de raccordement (49, 63) pour former au moins un circuit de mesure ou d'analyse du fluide,
- un corps (3) à l'intérieur duquel est ménagé un passage (13) pour le fluide, le corps (3) ayant au moins deux faces (9) de support des modules (5), lesquelles faces (9) présentent chacune un réseau régulier de moyens (11) de fixation des modules sur la base du même motif.

2. Ensemble selon la revendication 1, dans lequel le passage de fluide (13) et chaque face de support (9) s'étendent le long d'une direction longitudinale (L).

3. Ensemble selon la revendication 2, dans lequel le corps (3) a une section transversale en polygone, chaque face de support (9) formant un côté du polygone.

4. Ensemble selon la revendication 3, dans lequel le corps (3) a autant de faces de support (9) que le polygone a de côtés.

5. Ensemble selon l'une des revendications précédentes, dans lequel le passage de fluide (13) traverse de part en part le corps (3).

6. Ensemble selon l'une des revendications précédentes, dans lequel les moyens de fixation sont des orifices (11) ménagés dans chaque face de support (9) du corps (3).

7. Ensemble selon l'une des revendications précédentes, dans lequel les moyens (11) de fixation sont répartis aux angles de carrés.

8. Ensemble selon la revendication 7, dans lequel les carrés ont des côtés d'une longueur de 37 mm ou de 56 mm.

9. Ensemble selon l'une quelconque des revendications précédentes, l'ensemble comprenant en outre des éléments de raccordement (49, 63) pour raccorder entre eux les modules (5) fixés sur chaque face de support (9) et former sur chaque face un circuit de mesure ou d'analyse du fluide.

10. Ensemble selon l'une des revendications précédentes, l'ensemble comprenant en outre des composants fonctionnels (7) destinés à être montés sur les modules (5) pour être fixés sur chaque face de support (9) grâce aux moyens (11) de fixation et pour interagir avec le fluide.

11. Ensemble selon l'une des revendications précédentes, l'ensemble comprenant un filtre (15 ; 72) pour filtrer le fluide, lequel filtre est porté par le corps (3).

12. Utilisation d'un ensemble selon l'une des revendications précédentes pour distribuer un fluide d'alimentation d'un moteur de navire.

13. Utilisation selon la revendication 12, dans laquelle le fluide est de l'huile.

## Claims

1. A fluid distribution assembly (1) comprising:
- modules (5) for channeling the fluid and mounting functional components (7) designed to interact with the fluid, the functional components (7) being designed to be mounted on the modules (5) and the modules (5) being designed to be connected to each other by connecting elements (49, 63) to form at least one fluid measuring or analysis circuit,
- a body (3) inside which a passage (13) is formed for the fluid, the body (3) having at least two support surfaces (9) for the modules (5), said surfaces (9) each having a regular grid of means (11) for fastening the modules on the base with the same pattern.

2. The assembly according to claim 1, wherein the fluid passage (13) and each support surface (9) extend in a longitudinal direction (L).

3. The assembly according to claim 2, wherein the body (3) has a polygonal transverse section, each support surface (9) forming one side of the polygon.

4. The assembly according to claim 3, wherein the body (3) has the same number of support surfaces (9) as the polygon has sides.

5. The assembly according to one of the preceding claims, wherein the fluid passage (13) passes all the way through the body (3).

6. The assembly according to one of the preceding claims, wherein the fastening means are orifices (11) formed in each support surface (9) of the body (3).

7. The assembly according to one of the preceding claims, wherein the fastening means (11) are distributed at the corners of squares.

8. The assembly according to claim 7, wherein the squares have sides with a length of 37 mm or 56 mm.

9. The assembly according to any one of the preceding claims, the assembly also comprising connecting elements (49, 63) for connecting the modules (5) to each other that are fastened on each support surface (9) and for forming a fluid measuring or analysis circuit on each surface.

10. The assembly according to one of the preceding claims, the assembly also comprising functional components (7) designed to be mounted on the modules (5) to be fastened on each support surface (9) using the fastening means (11) and to interact with the fluid.

11. The assembly according to one of the preceding claims, the assembly comprising a filter (15; 72) for filtering the fluid, said filter being supported by the body (3).

12. A use of an assembly according to one of the preceding claims to distribute a supply fluid for a ship engine.

13. The use according to claim 12, wherein the fluid is oil.

## Patentansprüche

1. Fluidverteilungssystem (1) der Bauart, die umfasst:
- Module (5) zur Übertragung des Fluids und zur Anbringung von Funktionsbauteilen (7), die dazu bestimmt sind, eine Wechselwirkung mit dem Fluid einzugehen, wobei die Funktionsbauteile (7) dazu bestimmt sind, an den Modulen (5) angebracht zu sein und die Module (5) dazu bestimmt sind, untereinander durch Verbindungselemente (49, 63) verbunden zu sein, um mindestens einen Mess- oder Analysekreis für das Fluid zu bilden,
- einen Körper (3), in dessen Innerem ein Durchgang (13) für das Fluid ausgebildet ist, wobei der Körper (3) mindestens zwei Auflageflächen (9) für die Module (5) besitzt, welche Flächen (9) jeweils ein regelmäßiges Netz von Einrichtungen (11) zur Befestigung der Module auf der Grundlage desselben Musters aufweisen.

2. System nach Anspruch 1, wobei sich der Fluiddurchgang (13) und jede Auflagefläche (9) entlang einer Längsrichtung (L) erstrecken.

3. System nach Anspruch 2, wobei der Körper (3) einen vieleckigen Querschnitt hat, wobei jede Auflagefläche (9) eine Seite des Vielecks bildet.

4. System nach Anspruch 3, wobei der Körper (3) ebenso viele Haltungsflächen (9) hat wie das Vieleck Seiten hat.

5. System nach einem der vorhergehenden Ansprüche, wobei der Fluiddurchgang (13) den Körper (3) auf voller Länge durchquert.

6. System nach einem der vorhergehenden Ansprüche, wobei es sich bei den Befestigungseinrichtungen um Öffnungen (11) handelt, die in jeder Auflagefläche (9) des Körpers (3) ausgebildet sind.

7. System nach einem der vorhergehenden Ansprüche, wobei die Befestigungseinrichtungen (11) auf Ecken von Quadraten verteilt sind.

8. System nach Anspruch 7, wobei die Quadrate Seiten mit einer Länge von 37 mm oder 56 mm haben.

9. System nach einem der vorhergehenden Ansprüche, wobei das System darüber hinaus Verbindungselemente (49, 63) umfasst, um die auf jeder Auflagefläche (9) befestigten Module (5) untereinander zu verbinden und auf jeder Fläche einen Mess- oder Analysekreis für das Fluid zu bilden.

10. System nach einem der vorhergehenden Ansprüche, wobei das System darüber hinaus Funktionsbauteile (7) umfasst, die dazu bestimmt sind, an den Modulen (5) angebracht zu werden, um an jeder Auflagefläche (9) mittels der Befestigungseinrichtungen (11) befestigt zu sein und eine Wechselwirkung mit dem Fluid einzugehen.

11. System nach einem der vorhergehenden Ansprüche, wobei das System einen Filter (15; 72) zum Filtern des Fluids umfasst, welcher Filter vom Körper (3) getragen ist.

12. Verwendung eines Systems nach einem der vorhergehenden Ansprüche zum Verteilen eines Versorgungsfluids eines Schiffsmotors.

13. Verwendung nach Anspruch 12, wobei es sich bei dem Fluid um Öl handelt.
